# EUROPEAN PATENT SPECIFICATION

(11) **EP 4 420 439 B1**
(45) Date of publication and mention of the grant of the patent: **09.09.2026**
(21) Application number: 22917728.2
(22) Date of filing: 05.01.2022
(51) Int. Cl.: H04W 56/00

(54) **NON-TERRESTRIAL WIRELESS COMMUNICATION METHODS**
VERFAHREN ZUR NICHTTERRESTRISCHEN DRAHTLOSEN KOMMUNIKATION
PROCÉDÉS DE COMMUNICATION SANS FIL NON TERRESTRE

(43) Date of publication of application: 28.08.2024
(73) Proprietor: ZTE Corporation, Shenzhen, Guangdong 518057 (CN)
(72) Inventor: NIU, Li, Shenzhen, Guangdong 518057 (CN); DAI, Bo, Shenzhen, Guangdong 518057 (CN); SHA, Xiubin, Shenzhen, Guangdong 518057 (CN); LU, Ting, Shenzhen, Guangdong 518057 (CN)
(74) Representative: Vossius & Partner Patentanwälte Rechtsanwälte mbB
(86) International application number: PCT/CN2022/070293
(87) International publication number: WO 2023/130251

(56) References cited:
- WO-A1-2020/034564
- WO-A1-2021/088075
- WO-A1-2021/133638
- CN-A- 112 578 408
- US-A1- 2021 281 520
- QUALCOMM INCORPORATED: "Enhancements to time and frequency synchronization", vol. RAN WG1, no. e-Meeting; 20211111 - 20211119, 6 November 2021 (2021-11-06), XP052074875, Retrieved from the Internet <URL:https://ftp.3gpp.org/tsg_ran/WG1_RL1/TSGR1_107-e/Docs/R1-2111451.zip R1-2111451 Enhancements to time and frequency synchronization.docx> [retrieved on 20211106]
- MODERATOR (THALES): "FL Summary #2 on enhancements on UL time and frequency synchronization for NR NTN", vol. RAN WG1, no. e-Meeting; 20210816 - 20210827, 18 August 2021 (2021-08-18), XP052041771, Retrieved from the Internet <URL:https://ftp.3gpp.org/tsg_ran/WG1_RL1/TSGR1_106-e/Inbox/R1-2106782.zip R1-2106782.docx> [retrieved on 20210818]

## Description

### TECHNICAL FIELD

This disclosure is generally related to wireless communications, and particularly to non-terrestrial wireless communications.

### BACKGROUND

Wireless communication technologies are pivotal components of the increasingly interconnecting global communication networks. Wireless communications rely on accurately allocated time and frequency resources for transmitting and receiving wireless signals. In the circumstance of non-terrestrial wireless communications, a user equipment (UE) may need to rely on a positioning information of the UE itself (indicating where the UE is), positioning information of a satellite or an Unmanned Aerial Systems (UAS) platform (indicating the location of the intermediate communication stations), and Timing advance (TA) information to keep the communication with the BS station via a satellite or a UAS platform in a synchronized state. QUALCOMM INCORPORATED: "Enhancements to time and frequency synchronization" (3GPP DRAFT; R1-2111451) is related art.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. This summary is a brief description of certain aspects of this disclosure. It is not intended to limit the scope of this disclosure.

An embodiment of this disclosure provides a wireless communication method, performed by a user equipment (UE). The method includes transmitting to a base station (BS) a first message, comprising at least one of: timing information associated with Global Navigation Satellite System (GNSS) positioning information of the UE or system information, the system information including at least one of timing advance (TA) information or satellite positioning information, the timing information indicating a time period for the UE to update the GNSS position information or retrieve the system information, or an instruction, to the BS, associated with the time period when the UE updates the GNSS positioning information or retrieves the system information; and updating at least one of the GNSS positioning information or the system information during the time period.

Another embodiment of this disclosure provides another method of wireless communication, including receiving, by a first base station (BS) from a user equipment (UE), a first message comprising at least one of timing information associated with Global Navigation Satellite System (GNSS) positioning information of the UE or system information, the system information including at least on of timing advance (TA) information or satellite positioning information, the timing information indicating a time period for the UE to update the GNSS position information or retrieve the system information, or an instruction to the BS associated with the time period when the UE updates the GNSS positioning information or the system information; transmitting the system information to for the UE to update its system information; and configuring the UE after the time period.

Still another embodiment of this disclosure provides another wireless communication method, including transmitting, by a base station (BS) to a user equipment (UE), an instruction to configure a time period used by the UE to update Global Navigation Satellite System (GNSS) positioning information or retrieve system information, the system information including at least on of timing advance (TA) information or satellite positioning information; and providing the system information to the UE to for the UE to update the system information during the time period.

Still another embodiment of this disclosure provides another wireless communication method, including receiving, by a user equipment (UE) to a base station (BS), an instruction to configure a time period used by the UE to update Global Navigation Satellite System (GNSS) positioning information or retrieve system information, the system information including at least on of timing advance (TA) information or satellite positioning information; and receiving the system information by the UE to for the UE to update the system information during the time period.

Still another embodiment of this disclosure provides another wireless communication method, including receiving, by a first base station (BS) from a user equipment (UE), a first message comprising timing information associated with Global Navigation Satellite System (GNSS) positioning information of the UE or system information, the system information including at least on of timing advance (TA) information or satellite positioning information, the timing information indicating a time period for the UE to update the GNSS position information or retrieve the system information; and transmitting a second message to a second BS, to which the UE will establish connection, the second message comprising the timing information.

Still another embodiment of this disclosure provides another wireless communication method, including establishing, a first RRC connection between a base station (BS) and a user equipment (UE); and transmitting a message indicating a cause of the UE releasing a second RRC connection or establishing the first RRC connection with the BS after the UE establishes the first RRC connection with the BS.

Still another embodiment of this disclosure provides another wireless communication method, including establishing, a first RRC connection between a base station (BS) and a user equipment (UE); and receiving a message indicating a cause of the UE releasing a second RRC connection or establishing the first RRC connection with the BS after the UE establishes the first RRC connection with the BS.

Still another embodiment of this disclosure provides another wireless communication method, including providing information about a cause of a user equipment (UE) releasing a first RRC connection or reestablishing a second RRC connection with a base station (BS) from an access stratum (AS) layer to a non-access stratum (NAS) layer of the UE.

Still another embodiment of this disclosure provides a wireless communication apparatus, such as a base station or a user equipment. The apparatus includes a memory and a processor. The memory stores one or more instructions. The processor is configured to execute the instructions to perform the any one of the methods disclosed in this disclosure.

Still another embodiment of this disclosure provides a non-transitory computer readable medium, storing one or more instructions. The one or more instructions, when executed by a processor, causes a user equipment or a base station to perform any one of the methods disclosed in this disclosure.

The above and other aspects and their implementations are described in greater detail in the drawings, the descriptions, and the claims.

### BRIEF DESCRIPTION OF THE DRAWINGS

Various exemplary embodiments of the present disclosure are described in detail below with reference to the following drawings. The drawings are provided for purposes of illustration only and merely depict exemplary embodiments of the present disclosure to facilitate the understanding of the present disclosure. Therefore, the drawings should not be considered as limiting of the breadth, scope, or applicability of the present disclosure. It should be noted that for clarity and ease of illustration these drawings are not necessarily drawn to scale.
Fig. 1 shows an exemplary network architecture of a non-terrestrial network (NTN) communication system;
Fig. 2 shows signal transmission between a base station and a user equipment according to exemplary embodiments of this disclosure;
Fig. 3 shows an exemplary signal transmission process according to an example of this disclosure;
Fig. 4A shows an exemplary MAC Control Element used by embodiments of this disclosure;
Fig. 4B shows another exemplary MAC Control Element used by embodiments of this disclosure;
Fig. 5 shows signal transmission between two base stations and a user equipment according to other embodiments of this disclosure;
Fig. 6 shows signal transmission between a base station and a user equipment according to other embodiments of this disclosure; and
Fig. 7 shows signal transmission between a base station and a user equipment according to other embodiments of this disclosure.

### DETAILED DESCRIPTION

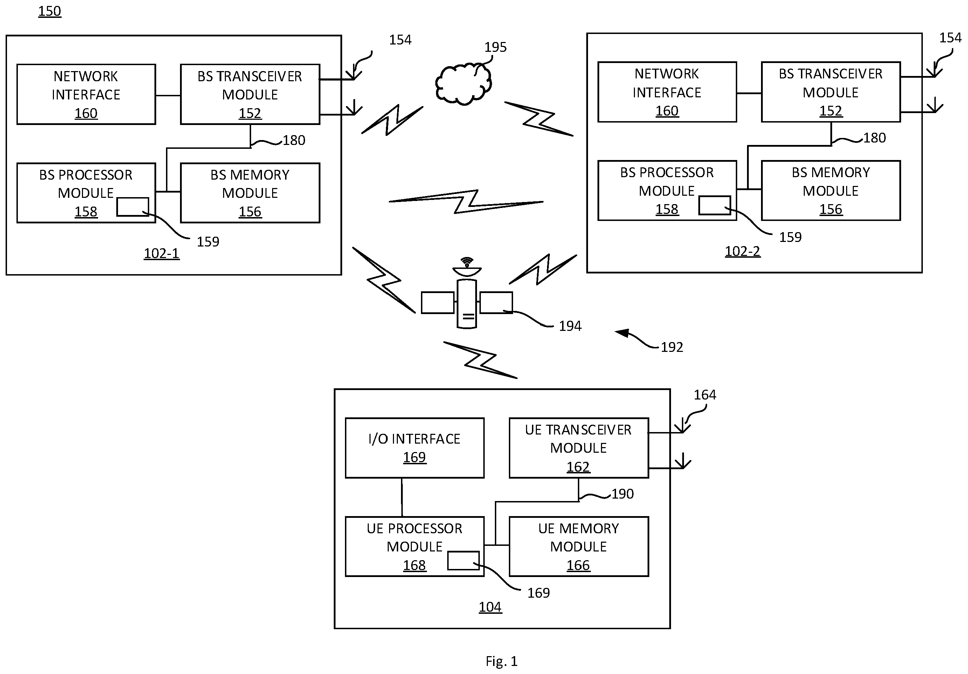

Fig. 1 illustrates a block diagram of an exemplary wireless communication system 150, in accordance with some embodiments of this disclosure. The system 150 may perform the various methods/steps disclose below. The system 150 may include components and elements configured to support operating features that need not be described in detail herein.

The system 150 may include a first base station (BS) 102-1, a second BS 102-2 (collectively BS 102), and a user equipment (UE) 104. The first BS 102-1 and the second BS 102-2 each includes a BS transceiver or transceiver module 152, a BS antenna system 154, a BS memory or memory module 156, a BS processor or processor module 158, and a network interface 160. The components of BS 102-1, 102-2 may be electrically coupled and in communication with one another as necessary via a data communication bus 180. Likewise, the UE 104 includes a UE transceiver or transceiver module 162, a UE antenna system 164, a UE memory or memory module 166, a UE processor or processor module 168, and an I/O interface 169. The components of the UE 104 may be electrically coupled and in communication with one another as necessary via a date communication bus 190. The BS 102-1 and/or 102-2 communicate with the UE 104 via a communication channel 192, which can be any wireless channel or other medium known in the art suitable for transmission of data as described herein. For example, the communication channel 192 may be established via on or more satellites (or UAS platforms) 194. The data or signal from the BS 102-1, 102-2 to the UE 104 may be relayed by the satellite 194. The communication channel 192 may include a feeder link between the BS 102-1, 102-2 and the satellite, and the communication channel 192 may include a service link between the UE 104 and the satellite 192.

As would be understood by persons of ordinary skill in the art, the system 150 may further include any number of modules other than the modules shown in Fig. 1. Those having ordinary skill in the art will understand that the various illustrative blocks, modules, circuits, and processing logic described in connection with the embodiments disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software depends upon the particular application and design constraints imposed on the overall system. Those familiar with the concepts described herein may implement such functionality in a suitable manner for each particular application, but such implementation decisions should not be interpreted as limiting the scope of the present disclosure.

A wireless transmission from a transmitting antenna of the UE 104 (referred to singular form for convenience, but can include multiple antennae) to a receiving antenna of the BS 102(referred to singular form for convenience, but can include multiple antennae) is known as an uplink (UL) transmission, and a wireless transmission from a transmitting antenna of the BS 102 to a receiving antenna of the UE 104 is known as a downlink (DL) transmission. In accordance with some embodiments, the UE transceiver 162 may be referred to herein as an "uplink" transceiver 162 that includes a RF transmitter and receiver circuitry that are each coupled to the UE antenna 164. A duplex switch (not shown) may alternatively couple the uplink transmitter or receiver to the uplink antenna in time duplex fashion. Similarly, in accordance with some embodiments, the BS transceiver 152 may be referred to herein as a "downlink" transceiver 152 that includes RF transmitter and receiver circuitry that are each coupled to the antenna array 154. A downlink duplex switch may alternatively couple the downlink transmitter or receiver to the downlink antenna array 154 in time duplex fashion. The operations of the two transceivers 152 and 162 are coordinated in time such that the uplink receiver is coupled to the uplink UE antenna 164 for reception of transmissions over the wireless communication channel 192 at the same time that the downlink transmitter is coupled to the downlink antenna array 154. There may be close synchronization timing with only a minimal guard time between changes in duplex direction. The UE transceiver 162 communicates through the UE antenna 164 with the BS 102 via the wireless communication channel 192. The BS transceiver 152 communicates through the BS antenna 154 of a BS (e.g., the first BS 102-1) with the other BS (e.g., the second BS 102-2) via a wireless communication channel 192. The wireless communication channel 196 can be any wireless channel or other medium known in the art suitable for direct communication between BSs.

The UE transceiver 162 and the BS transceiver 152 are configured to communicate via the wireless data communication channel 192, and cooperate with a suitably configured RF antenna arrangement 154/164 that can support a particular wireless communication protocol and modulation scheme. In some exemplary embodiments, the UE transceiver 162 and the BS transceiver 152 are configured to support industry standards such as the Long-Term Evolution (LTE) and 5G standards (e.g., NR), and the like. It is understood, however, that the invention is not necessarily limited in application to a particular standard and associated protocols. Rather, the UE transceiver 162 and the BS transceiver 152 may be configured to support alternative, or additional, wireless data communication protocols, including future standards or variations thereof.

The processor modules 158 and 168 may be implemented, or realized, with a general-purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor module may be realized as a microprocessor, a controller, a microcontroller, a state machine, or the like. A processor module may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the embodiments disclosed herein may be embodied directly in hardware, in firmware, in a software module executed by processor modules 158 and 168, respectively, or in any practical combination thereof. The memory modules 156 and 166 may be realized as RAM memory, flash memory, ROM memory, EPROM memory, EEPROM memory, registers, a hard disk, a removable disk, a CD-ROM, or any other form of storage medium known in the art. In this regard, the memory modules 156 and 166 may be coupled to the processor modules 158 and 168, respectively, such that the processors modules 158 and 168 can read information from, and write information to, memory modules 156 and 166, respectively. The memory modules 156 and 166 may also be integrated into their respective processor modules 158 and 168. In some embodiments, the memory modules 156 and 166 may each include a cache memory for storing temporary variables or other intermediate information during execution of instructions to be executed by processor modules 158 and 168, respectively. The memory modules 156 and 166 may also each include non-volatile memory for storing instructions to be executed by the processor modules 158 and 168, respectively.

The network interface 160 generally represents the hardware, software, firmware, processing logic, and/or other components of the base station 102 that enable bi-directional communication between BS transceiver 152 and other network components and communication nodes configured to communication with the BS 102. For example, network interface 160 may be configured to support internet or WiMAX traffic. In a typical deployment, without limitation, network interface 160 provides an 802.3 Ethernet interface such that BS transceiver 152 can communicate with a conventional Ethernet based computer network. In this manner, the network interface 160 may include a physical interface for connection to the computer network (e.g., Mobile Switching Center (MSC)) or one or more core network 195 for mobile communications. The terms "configured for" or "configured to" as used herein with respect to a specified operation or function refers to a device, component, circuit, structure, machine, signal, etc. that is physically constructed, programmed, formatted and/or arranged to perform the specified operation or function. The network interface 160 could allow the BS 102 to communicate with other BSs or a CN over a wired or wireless connection.

In the context of a non-terrestrial network (NTN) communication system, a user equipment (UE) may need to have GNSS positioning information and system information from a BS to maintain synchronization of the communication with the base station (BS). The GNSS positioning information is indicative of the location of the UE. The system information may include a satellite positioning information indicating the locations of one or more of satellites (or UAS platform) 194 relevant to the communication with the BS. The system information may further include a timing advance (TA) information. The timing advance information may be used by the UE to calculate an advanced time amount to transmit a signal to compensate for transmission delay, such that the transmitted signal can be received by the BS at an acceptable time window. However, when the UE is updating the GNSS positioning information, the TA information, and/or the satellite positioning information, the UE may be unable to receive other configuring signals from the BS. If the BS continues transmitting signals to the UE when such updating process is being performed, the delivery of such configuring command may fail.

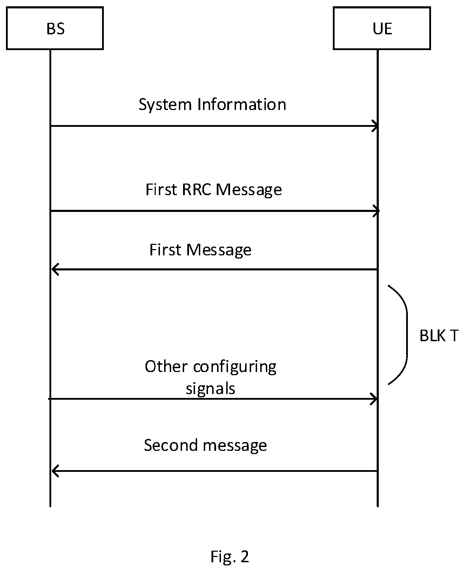

As shown in Fig. 2, an exemplary embodiment of this disclosure provides a wireless communication method. The method includes the steps of transmitting by a UE to a BS a first message, including at least one of: timing information associated with Global Navigation Satellite System (GNSS) positioning information or system information, or an instruction associated with a first time period when a user equipment (UE) updates the GNSS positioning information or the system information (e.g., an instruction to the BS to avoid/suspend communication with the UE during the first time period when the UE updates the GNSS positioning information or the system information); and updating at least one of the GNSS positioning information or the system information during the first time period. The system information may include at least one of timing advance (TA) information or satellite positioning information. The timing information may indicate or may be associated with the first time period for the UE to update the GNSS position information or retrieve the system information.

Specifically, the UE may transmit the first message including the timing information associated with GNSS positioning information or system information, and the first message can be used by the BS to evaluate when the current GNSS positioning information or the system information would expire, such that the BS can transmit the configuring signals, such as updated system information, before a first time period when the UE is updating the GNSS positioning information and/or system information. Thereby, the BS can avoid configuring the UE during the first time period when the UE is updating its GNSS positioning information and/or system information by suspending transmission of additional configuring signals to the UE.

In one implementation, the timing information associated with the GNSS positioning information or the system information may include at least one of a time when the UE obtains the GNSS positioning information, a time when the UE receives (and or applies) the system information, an index indicating a transmission time of the system information, a starting time of a timer associated with the GNSS positioning information or a timer associated with the system information, a value of one or more of the timers, a remaining time before the system information expires, a time difference between the UE receiving the system information and applying the system information, or a time difference between the BS transmitting the system information and the UE receiving the system information. The remaining time before the system information or the GNSS positioning information expires can be determined by the total valid time of the system information and the GNSS positioning information and the timing when the UE applies or retrieves the system information or the GNSS positioning information. For example, the remaining valid time can be calculated by the total valid time of the system information or the GNSS positioning information minus the time period from that start of the valid time to when the UE reports the timing information to the BS. The remaining valid time before the system information or the GNSS positioning information expires can also be indicated by the value of the timer. The timer can start with a number corresponding to the total valid time and count down to zero (as a threshold value). Alternatively, the timer can also start from zero and count to a threshold value corresponding to the total valid time of the system information and GNSS positioning information. The timer can be started once the UE receives or applies the system information. The timer can also be started once the UE update it GNSS positioning information (or start of the valid time duration). The valid time duration above may be associated with the relative movement between the communication entities involved (e.g., the UE, the satellite, and the base station).

The timing information may be indicative of a valid time duration of the GNSS positioning information and the system information. The time information can be indicated in normal time unit or in unit of wireless frames, subframes, time slots, or superior frames. The time information can also be indicated by an index to wireless frames, subframes, time slots, or superior frames.

According to one implementation, the UE may start a timer associated with the GNSS positioning information or a timer associated with the system information after the UE receives (or applies) one or more the GNSS positioning information or the system information. There may be a preset threshold. The UE can use the timer to calculate when the GNSS positioning information and/or the system information would expire or to calculate when the UE need to update the GNSS positioning information or the system information. The timer threshold can be set to a valid time length of the GNSS positioning information or the system information, such that the UE can obtain the timing information of the validity of the GNSS positioning information or the system information. Further, the UE may report the starting time of the timer associated with the GNSS positioning information or the timer associated with the system information. The value of one or more of the timers can also be reported to the BS for the BS to evaluate when the GNSS positioning information or the system information may expire.

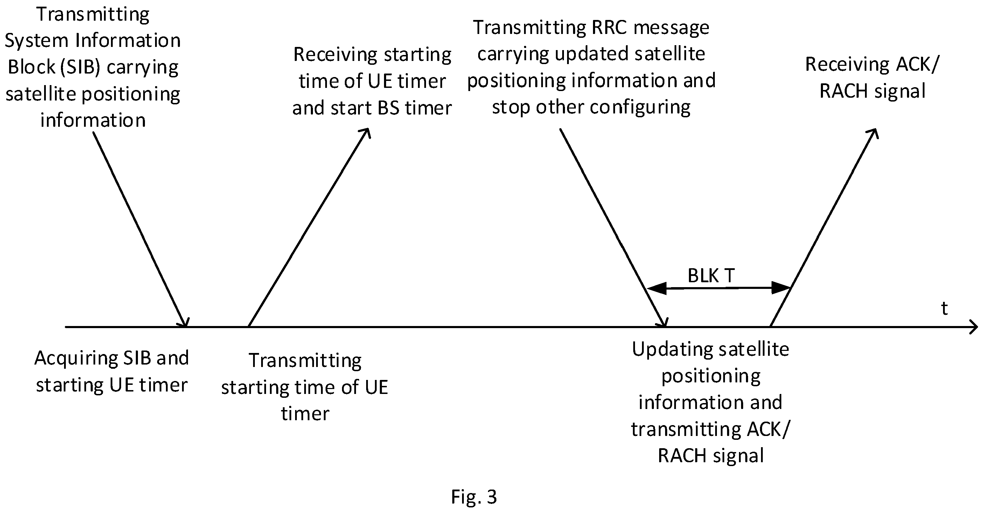

Referring to Fig. 3, the BS may transmit a System Information Block (SIB) that carries satellite positioning information to UE. After acquiring the SIB, the UE starts a UE timer 169 (as shown in Fig. 1) and reports the starting time of the timer to the BS. After receiving the starting time of the UE timer, the BS may start its own timer 159 (as shown in Fig. 1) in order to transmit an RRC message carrying updated satellite positioning information in time. After the RRC message carrying the updated satellite positioning information is transmitted, the BS may avoid sending additional configuring signals to the UE during the first time period BLK T. The UE may acquire the RRC message carrying the updated satellite positioning information during the time period BLK T and transmit an ACK/RACH signal to the BS. Afterwards, the BS can continuing communicate with the BS via a satellite. This example uses satellite positioning information as an example, the TA information and other type of system information can also be updated according to this mechanism. The system information transmitted by the BS here may be accompanied by an index. The index may directly or indirectly indicate a transmission time of the system information. The UE can use the index to decide the transmission time of the received system information. The UE may report the index to the BS, such that BS can use the index to tell the current system information the UE possesses and to look up when the system information is transmitted by looking up the index.

As explained above, the system information transmitted from the BS may be accompanied with an index associated with a transmission time of the system information. Therefore, when the UE applies or retrieves the system information, the UE can tell the identity of the system information. The index may indicate the transmission time of the system information. The index may just identify the system information, and therefore the UE may report the index of the system information back to the BS. The BS can then use the index of the system information as reported to tell or look up the identity of the system information and the corresponding transmission time of the system information.

In one implementation, the BS may transmit and the UE may receive a first Radio Resource Control (RRC) message that activates the transmission of the first message. For example, an RRC message carries an indication that indicating whether to enable UE to report the transmission of the first message. The RRC message may include at least one of the following messages: an RRC reconfiguration message, an RRC establishment message, an RRC reestablishment message, an RRC resume message, or a UE information request message.

Alternatively, in another embodiment of this disclosure in Fig. 2, the UE may transmit the first message including an instruction to the BS to avoid/suspend communication with a UE during a first time period when the UE updates its GNSS positioning information or the system information. In this embodiment, the UE may send the instruction the BS to indicated that the UE is about to update the GNSS positioning information or the system information during a following first time period. The BS can avoid or suspend transmission of further configuring signal to the UE during the first time period, such that the BS can avoid failure the configuring signal transmitted during the first time period.

For example, the instruction can be transmitted when at least one of the following conditions is met: The UE is determined to be out-of-synchronization with the BS within a specific time period; the UE determines the system information will be expired within a specific time period; a timer associated with the system information will reach a first threshold value within a specific time period; the UE retrieves/updates the system information or will retrieves/updates the system information within a specific time period; the GNSS positioning information will be expired within a specific time period; a timer associated with the GNSS positioning information will reach a threshold value within a specific time period; or the UE initiates to obtain an updated GNSS positioning information or will obtain the updated GNSS positioning information within a specific time period. The time periods and threshold values in the different conditions above can be identical or can be different depending on different circumstances. The specific time periods can be short enough that the first message with the instruction is transmitted right before the circumstance (such as the UE being determined to be out-of-synchronization with the BS) is met.

In one implementation, the first message can be transmitted in a preamble sequence for random access or via a Physical Uplink Control Channel (PUCCH). Further, the BS can transmit and the UE may receive an RRC message to configure frequency and/or time domain resources for transmitting the first message via the preamble sequence for random access or the PUCCH. Additionally, the frequency and/or time domain resource configuration used for transmitting the first message may indicate which condition or conditions above is met and which condition triggers the transmission of the first message of the instruction. That is, the BS can have a mapping between the time/frequency domain resource configuration of the preamble sequence and the preamble or PUCCH used to transmit the instruction and the different conditions listed above. By the time and/or frequency configuration used to transmit the first message, the BS can tell which one or more conditions are met and triggers the transmission of the first message. For example, the BS can configure to use certain PRACH resource configuration (including periods, initiating time, and/or frequency points) for the preamble sequence that carries the first message for a certain condition, which triggers the report of the first message. In response, if the BS receives a preamble sequence in such PRACH resource configuration, the BS can confirm that the corresponding condition is met. This approach can reduce the amount of the information the message needs to carry and can reduce the overhead of the report.

Likewise, the BS can configure the UE to use certain PUCCH configuration (including periods, initiating times, and frequency points) to transmit the instruction when a specific condition is met. Thereby, the BS can tell which condition is met and which condition triggers the transmission of the instruction based on the resource configuration of the received instruction.

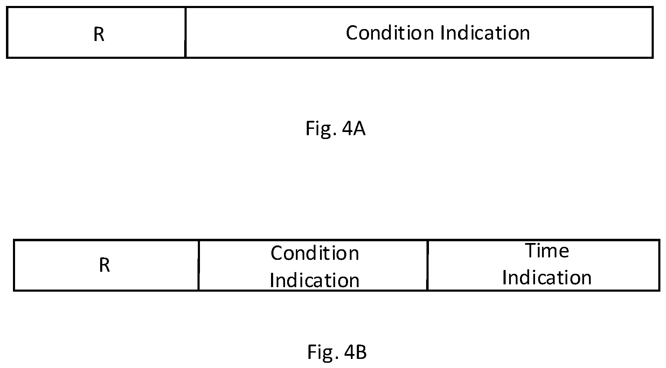

Alternatively, transmitting the first message may include transmitting the first message as a MAC Control Element (MAC CE). The MAC CE has a larger capacity to carry more information. As shown in Fig. 4A, the MAC CE used to transmit the first message may include a reserved/optional bit R, followed by one or more following bits (the condition indication) indicating the condition being met. As an example, the reserved bit R can be followed by three digits, which can indicate eight different conditions in total. Specifically, 000, 001, 011, 111, and so on, each can represent a condition being met. Additionally, as shown in Fig. 4B, the MAC CE may further include one or more additional following bits (the time indication) indicating at least one of a time duration or a duration length of the first time period. The time during or the duration length can be a relative time indicating how long the first time period the UE needs after a specific time point. The time duration or the duration length can also be an absolute time designating a specific time period as the first time period. The additional bits can also indicate the length of the first time period expected by the UE, whether or not it indicates a specific time point as the first time period.

Alternatively, the UE can transmit the first message carrying the first instruction by one or more RRC messages to the BS. When one or more conditions to signal the BS is met, the UE may transmit an RRC message carrying the instruction to request for the first time period to update the GNSS positioning information and/or the system information, while other configuration signals from the BS is suspended. The RRC message used to carry the first message with the instruction can be a measurement report message, a failure information message, a UE assistance information message, an RRC system information request message, or other messages. The RRC message used to carry the instruction can also include one or more bit to indicate the condition being met and to indicate the information of a specific time duration or a duration length as discussed above.

In one implementation, the method may include starting updating the GNSS positioning information or retrieving/applying the system information at a predetermined time period after transmitting the first message carrying the instruction to the BS. After the BS transmitted, at a n time point, the instruction to the BS requesting for the first time period, the UE can start to update the GNSS positioning information or the system information at a time point n+k. k can be a preset time gap, and it can be configured by the BS. Therefore, the BS possesses the information of the length of the preset time gap, and the BS can calculate when the first time period would start by using the information associated with the transmission time of the first message and the preset time gap k. Because the BS can use the instruction sent by UE to tell that the UE would not be able to receive additional configuration signal between time point n+k and time n+k+q, where q can be a preset time length for the first time period, BS can suspend/avoid transmission of additional configuring signal during such first time period. The time information (such as the length of time gap k and length of the first time period q) can be configured by the BS beforehand or can be request by the UE, using the instruction carried by the first message or by other means. This approach can reduce the overhead for setting up the time period.

Alternatively, in another implementation, the method may further include receiving an acknowledgement message from the BS in response to the BS receiving the first message; and updating the GNSS positioning information and/or retrieving/applying the system information after the acknowledgement message is received and a timer associated with at least one of the system information or the GNSS positioning information reaches a threshold. In this implementation, the UE would wait for the acknowledgement message from the BS. The BS transmits the acknowledgement message after the BS receives the instruction from the UE to request for the first time period. Once the UE received the acknowledgement, UE can presume that the BS would suspend the transmission of other configuring signals during the first time period. This approach further ensures that the BS received the UE's first time period request and ensures that the BS would suspend signal transmission during the first time period. Therefore, once the timer associated with at least one of the system information or the GNSS positioning information reaches a threshold, which indicates either one of the information expires or will be expired soon, the UE can timely update the GNSS positioning information and the system information when the BS suspends the transmission of additional configuring signals.

In one implementation, the method may further includes sending a timing information associated with the GNSS positioning information to a core network 195 (as shown in Fig. 1) connected to the BS. The UE may provide the timing information associated with the GNSS positioning information to the core network via the BS. In this circumstance, the timing information is relayed by a satellite (or a UAS platform) to the BS, and the BS can provide the timing information to the core network. Therefore, the core network can obtain the timing information associated with the GNSS positioning information. The timing information may include at least one of a valid time length of the GNSS positioning information, a remaining time before the GNSS positioning information expires, or a starting time of the GNSS positioning information. The timing information can also be other timing information disclosed in this disclosure. Thereby, the core network can, for example, obtain the valid time period of the GNSS positioning information, position information of the UE, and the time period when the UE can maintain connection in a synchronization status.

In one implementation, the UE may further provide UE positioning information to a core network via a NAS data packet in an RRC message transmitted by the UE. In some situations, the BS may be connected to many core networks. The BS may need the positioning information of the UE to choose a proper core networks for the UE. Therefore, the UE may provide its positioning information in a NAS data packet when it transmits an RRC message. Once the BS receives the RRC message having the positioning information, the BS may provide the positioning information of the UE to one or more core networks. For example, the BS may use an uplink initial message to carry a message including the UE positioning information to the core networks. The message used to carry the positioning information can be a UE context release message, a PDU session resource setup response message, a downlink NAS transport message, an initial context setup request message, a UE information transfer message. As an example, the UE positioning information includes at least one of physical position information of the UE or an identification of a recommended core network, such as Mobility Management Entity (MME) identifications.

In one embodiment as shown in Fig. 2, the method may further include sending a second message, to the BS, indicating a cause of the UE releasing an RRC connection and/or reestablishing an RRC connection with the BS after the UE reestablishes the RRC connection with the BS after the GNSS positioning information is updated. When the GNSS positioning information expires, the UE may need to update its own GNSS positioning information. It may take some time, e.g., a couple of seconds, for the UE to update the GNSS positioning information. As such, the UE may be disconnected from the satellite (or UAS platform) first by releasing the RRC connection with the BS. After the new GNSS positioning information is obtained, the UE may be reconnected to the BS with the satellite. After the connection is established, the BS may need to obtain the cause why the UE released the previous RRC connection with the BS, such that the BS can perform some adjustments to configure future operations. For example, the BS may adjust the first time period's time slot and/or time length. Thus, the UE may send the second message indicating a cause of the UE releasing an RRC connection and/or reestablishing an RRC connection with the BS after the UE reestablishes the RRC connection with the BS. The cause may include at least one of an expiration of the GNSS positioning information, a timer associated with the GNSS positioning information reaching a threshold, or an update of the GNSS positioning information. Further, the second message may be transmitted as at least one of an RRC reestablishment request message, an RRC resume request message, an RRC connection request message, an RRC early data request message, a UE information response message, a UE assistance information message.

In one implementation, the method may further include providing information about the cause of the UE releasing an RRC connection and/or reestablishing an RRC connection with the BS from an access stratum (AS) layer to a non-access stratum (NAS) layer of the UE. Specifically, the UE may include an AS layer and a NAS layer. The AS layer may provide the information of the cause of the UE releasing an RRC connection and/or reestablishing an RRC connection with the BS to the NAS layer. The NAS layer may initiate the release process of the RRC connection. Alternatively, the AS layer may trigger the release of the RRC connection, and the AS layer may instruct the NAS layer that the GNSS positioning information expires and an update positioning information is needed. Alternatively, the BS may receive an RRC release message from the BS. The RRC release message may include the cause of the UE releasing an RRC connection and/or reestablishing an RRC connection with the BS to the NAS layer, and the AS layer may provide the cause to the NAS layer.

Corresponding to the above methods performed by a UE, another embodiment of this disclosure provides a wireless communication method performed by a base station (BS). As shown in Fig. 2, the method includes receiving, by a first base station (BS) from a user equipment (UE) (e.g., via a satellite), a first message comprising at least one of timing information associated with Global Navigation Satellite System (GNSS) positioning information of the UE or system information or an instruction to the BS associated with a first time period when the UE updates the GNSS positioning information or the system information (e.g., an instruction to suspend/avoid communication with the UE during the first time period when the UE updates the GNSS positioning information or the system information); transmitting the system information for the UE to update its system information; and configuring the UE after the first time period. The system information may include at least one of timing advance (TA) information or satellite positioning information, and the timing information may indicate or may be associated with the first time period for the UE to update the GNSS position information or retrieve the system information. The system information may be accompanied with an index associated with a transmission time of the system information.

As discussed above, the timing information can be used by the BS to calculate the first time period when the UE needs to update its GNSS positioning information and system information. The BS may further transmit the system information to the UE, such that the UE can have updated satellite positioning information and/or TA information. The BS may thereby suspend other configuring operations during the first time period. The BS then may configure the UE after the first time period when the UE in a status to receive the following configuring commands from the BS. In one implementation, the BS further determines timing of the first time period. Therefore, the BS may avoid transmitting configuring commands to the BS during the first time period to avoid loss of configuring command. Additionally, the BS may configure the first time period for the UE to update the GNSS positioning information and the system information.

In another implementation, the BS determines an expiration time of at least one of the GNSS positioning information or the system information based on the timing information associated with the GNSS positioning information or the system information provided to the BS, such that, as shown in Fig. 3, the BS can transmit updated system information to the UE before the first time period arrives and suspend transmission of other configuring commands to the UE during the first time period, such that the BS can avoid loss of configuring commands.

In one implementation, the timing information associated the GNSS positioning information or the system information may include at least one of a time when the UE obtains the GNSS positioning information, a time when the UE receives the system information, an index indicating a transmission time of the system information, a starting time of a timer associated with the GNSS positioning information or a timer associated with the system information, a value of one or more of the timers, a remaining time before the system information expires, a time difference between the UE receiving the system information and applying the system information, or a time difference between the BS transmitting the system information and the UE receiving the system information.

Generally speaking, the timing information may be indicative of a valid time duration of the GNSS positioning information and the system information. For example, the BS may use the time information to determine a starting time of a timer of the UE associated with the GNSS positioning information or the system information. The UE starts the timer when it applies the GNSS positioning information and/or the system information, and with the starting time of the UE timer, the BS can obtain the information about when the GNSS positioning information and/or the system information are applied. The BS may use this information along with other information, such as a valid time length of the system information and the GNSS positioning information, to calculate when the UE plans to update GNSS positioning information and system information.

In one implementation as shown in Fig. 2, the BS may transmit a Radio Resource Control (RRC) message to the UE to activate transmission of the first message. The RRC message used to activate the transmission of the first message may include at least one of the following messages: an RRC reconfiguration message, an RRC establishment message, an RRC reestablishment message, an RRC resume message, or a UE information request message.

Alternatively, as discuss above, the BS may receive an instruction from the UE to designate or request a first time period when the UE updates the GNSS positioning information and the system information. For example, the instruction may be transmitted when at least one of the following conditions is met: The UE is determined to be out-of-synchronization with the BS within a specific time period; the UE determines the system information will be expired within a specific time period; a timer associated with the system information will reach a first threshold value within a specific time period; the UE retrieves/updates the system information or will retrieves/updates the system information within a specific time period; the GNSS positioning information will be expired within a specific time period; a timer associated with the GNSS positioning information will reach a threshold value within a specific time period; or the UE initiates to obtain an updated GNSS positioning information or will obtain the updated GNSS positioning information within a specific time period. The time periods and threshold values in the different conditions above can be identical or can be different depending on different circumstances. The specific time periods can be short enough that the first message with the instruction is transmitted right before the circumstance (such as the UE being determined to be out-of-synchronization with the BS) is met.

In one implementation, the first message of the instruction may be transmitted in a preamble sequence for random access or via a Physical Uplink Control Channel (PUCCH). Further, the BS may transmit an RRC message to configure frequency and/or time domain resources for the first message. The frequency and/or time domain resource configuration used by the preamble sequence or the PUCCH indicates the condition being met.

Alternatively, the first message may be transmitted as a MAC Control Element (MAC CE). As shown in Fig. 4A, the MAC CE may include a reserved bit R and one or more following bits indicating the condition being met. Additionally, as shown in Fig. 4B the MAC CE may further include additional following bits indicating least one of a time duration or a duration length of the first time period.

In one implementation, the BS may transmit an acknowledgement message to the UE in response to the BS receiving the first message including the instruction requesting the first time period. This acknowledgement message may confirm that the BS receives the instruction from the UE, and the BS may take corresponding measures for the request of the first time period, such as suspending other configuring transmission during the first time period.

In one implementation, as discussed above, the UE may choose to report its timing information associated with the GNSS positioning information to a core network. Thus, the BS may further receive the timing information associated with the GNSS positioning information and send a corresponding timing information to a core network. The timing information associated with the GNSS positioning information may include at least one of a valid time length of the GNSS positioning information; a remaining time before the GNSS positioning information expires; or a starting time of the GNSS positioning information. The corresponding timing information can be transmitted in a payload establish/change request message or an initial context establishment responsive message.

In the case in which the UE provides the cause of the UE releasing an RRC connection and/or reestablishing an RRC connection with the BS, the BS may further receive a second message indicating the cause of the UE releasing an RRC connection and/or reestablishing an RRC connection with the BS after the UE reestablishes another RRC connection with the BS after the GNSS positioning information is updated. The cause may include at least one of an expiration of the GNSS positioning information, a timer associated with the GNSS positioning information reaching a threshold, or an update of the GNSS positioning information. Additionally, the second message may be transmitted as at least one of an RRC reestablishment request message, an RRC resume request message, an RRC connection request message, an RRC early data request message, a UE information response message, a UE assistance information message. In one implementation, the BS may further adjust the configuration of the UE, such as adjusting the first time period for future use according to the second message. Alternatively, the BS may transmit an RRC release message from the BS. The RRC release message may include the cause.

In the case in which a UE reports its GNSS positioning information to a core network, the BS may receive a UE positioning information and provide it to the core network via a NAS data packet in an RRC message transmitted by the UE. The message used to carry the positioning information can be a UE context release message, a PDU session resource setup response message, a downlink NAS transport message, an initial context setup request message, a UE information transfer message. As an example, the UE positioning information may include at least one of physical position information of the UE or an identification of a recommended core network, such as Mobility Management Entity (MME) identifications.

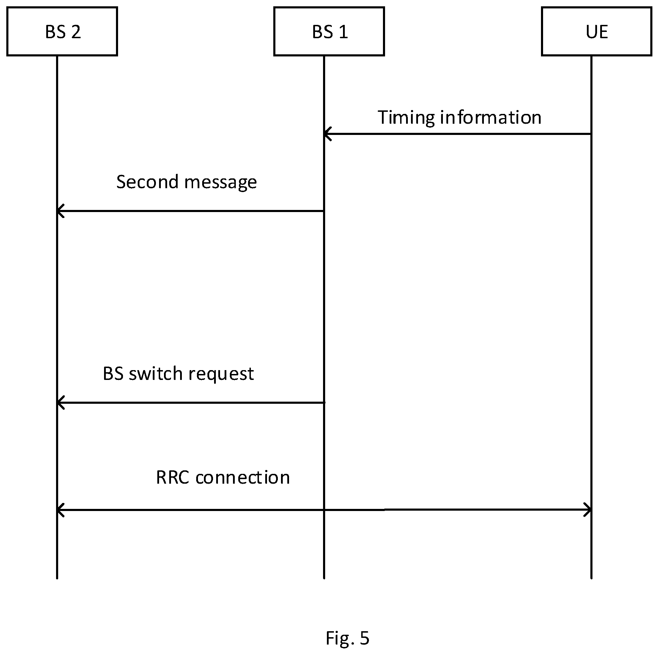

In an embodiment as shown in Fig. 5, the BS may further transmit a second message to a second BS, to which the UE will establish connection via a satellite. The second message includes the timing information. Along with the change of the BS, the UE may need to get onto schedule with the new BS or to update its GNSS positioning information and system information. In this circumstance, the original BS possessing the timing information may need to transfer the timing information to the new BS, with which the UE would establish connection. The timing information may be transferred directly to the new BS, if there is a direct connection between the original BS and the new BS. The timing information can also be transferred via the core network connected between the original BS or the new BS. With the timing information from the original BS, the new BS can connect with the UE, and perform the functions of suspending the transmission of configuring messages, and/or configuring the first time period of the UE. For example, the second message may include at least one of a remaining time before the system information expires; a value of a timer associated with the system information; a starting time of the timer; a threshold value of the timer; a remaining time before the timer reach the threshold value; a valid time length of the system information; or a starting time of the system information.

Additionally, in one implementation as shown in Fig. 5, the second message provided to the second BS may include GNSS positioning information or the timing information related to the GNSS positioning information. The second message may include at least one of a valid time length of the GNSS positioning information; a remaining time before the GNSS position information expires; or a starting time of the GNSS position information. The original BS may further transmit a BS switch request to a second BS directly or via a core network depending on whether there is a direct connection between the two base stations.

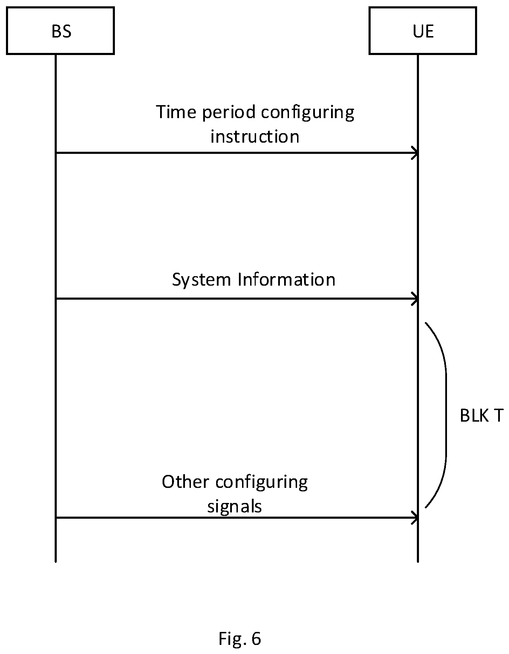

In another embodiment as shown in Fig. 6, this disclosure provides another wireless communication method, including transmitting, by a base station (BS) to a user equipment (UE) via a satellite, an instruction to configure a first time period used by the UE to update Global Navigation Satellite System (GNSS) positioning information or retrieve/apply system information; and providing the system information to the UE to for the UE to update the system information during the first time period. The system information includes at least on of timing advance (TA) information or satellite positioning information. In this embodiment, the BS may decide the first time period for the UE to update or to apply/retrieve the system information and/or GNSS positioning information, and the BS may provide the system information to the UE before or after the first time period when the synchronization of the connection between the BS and the UE is established. The BS can also suspend the transmission of other configuring signals to the UE during the first time period when the UE is updating its GNSS positioning information and/or system information. A proper first time period can be determined by the BS based on the time information provided by the UE or by other information possessed by the BS. The details of the time information and how the time information is provided has been described above and the underlying principles therein should be applicable to this embodiment. This approach gives the BS more control, and it may reduce the overhead for reporting much information from the UE.

In one implementation, the instruction is transmitted as at least one of an RRC message, a MAC Control Element (MAC CE), or a downlink control information (DCI). The BS can use an RRC message to carry the configuration of the first time period to configured the first time period of the UE. The RRC message can be an RRC release message, an RRC reassignment message, or other messages. The RRC message or the MAC CE can include information related to a specific time of the first time period to be performed, which can be an absolute time or a relative time. The RRC message or the MAC CE can also relatively indicate after how much time the first time period should start. The RRC message or the MAC CE can also indicate how often the first time period should be set up. The instruction may include at least one of a starting time of the first time period, a length of the first time period, a periodicity information of the first time period, or a delay time to a beginning of the first time period.

In one implementation, the first time period may be associated with an inactive period of a Discontinuous Reception (DRX) configuration. For example, the first time period used to update the system information and/or the GNSS positioning information can be a certain timer period within the inactive period of a DRX configuration. Further, the BS may further transmit an RRC message to configure the DRX configuration or to configure whether the inactive period is used as the first time period.

Corresponding to the method above performed by an BS, an embodiment of this disclosure provides a wireless communication method performed by the UE. Referring to Fig. 6, the method includes: receiving, by a UE from a base BS, via a satellite (or a UAS platform), an instruction to configure a first time period used by the UE to update Global Navigation Satellite System (GNSS) positioning information or retrieve/apply system information, the system information including at least on of timing advance (TA) information or satellite positioning information; and receiving the system information by the UE to for the UE to update the system information during the first time period.

As described above, the instruction may be transmitted as at least one of an RRC message, a MAC Control Element, or a downlink control information (DCI). The instruction may include at least one of a starting time of the first time period, a length of the first time period, a periodicity information of the first time period, or a delay time to a beginning of the first time period.

As described above, the first time period may be associated with an inactive period of a Discontinuous Reception (DRX) configuration. The UE may further receive an RRC message to configure the DRX configuration or to configure whether the inactive period is used as the first time period.

According to the embodiment as shown in Fig. 5, another example wireless communication method is disclosed. The method includes receiving, by a first base station (BS) from a user equipment (UE), a first message including timing information associated with Global Navigation Satellite System (GNSS) positioning information of the UE or system information, the system information including at least on of timing advance (TA) information or satellite positioning information, the timing information indicating a time period for the UE to update the GNSS position information or retrieve the system information; and transmitting a second message to a second BS, to which the UE will establish connection, the second message comprising the timing information.

Along with the change (or switching, or handover) of the BS it connects to, the UE may need to get onto schedule or synchronization with the new BS or to update its GNSS positioning information and system information. In this circumstance, the original BS possessing the timing information may need to transfer the timing information to the new BS, with which the UE would establish connection. The timing information may be transferred directly to the new BS, if there is a direct connection or link between the original BS and the new BS. The timing information can also be transferred via a core network connected between the original BS or the new BS. With the timing information obtained from the original BS, the new BS can establish connection with the UE, and perform the functions of suspending the transmission of configuring messages, and/or configuring the first time period of the UE. The original BS may further transmit a BS switch request to a second BS directly or via a core network depending on whether there is a direct connection between the two base stations.

According to one implementation, the second message may include timing information related to system information, such as at least one of a remaining time before the system information expires; a value of a timer associated with the system information; a starting time of the timer; a threshold value of the timer; a remaining time before the timer reach the threshold value; a valid time length of the system information; or a starting time of the system information.

Additionally, the second message may additionally or alternatively include timing information of the GNSS positioning information, such as a valid time length of the GNSS positioning information; a remaining time before the GNSS position information expires; or a starting time of the GNSS position information.

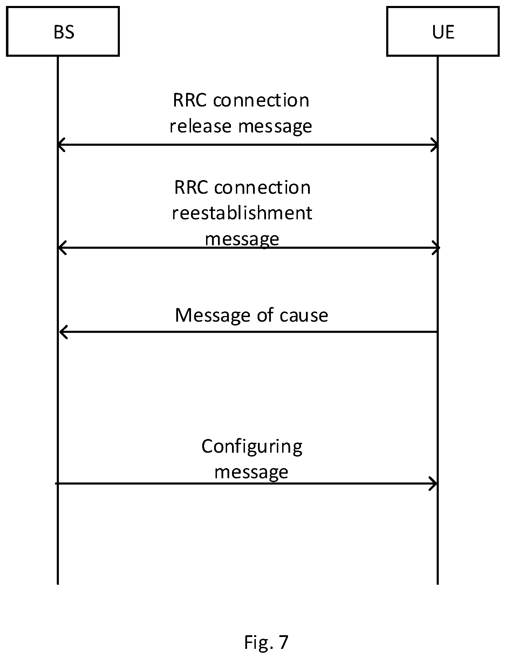

As shown in Fig. 7, according to another embodiment of this disclosure, another wireless communication method is provided. The method may include reestablishing a first RRC connection between a base station (BS) and a user equipment (UE); and transmitting a message indicating a cause of the UE releasing a prior second RRC connection and/or establishing the first RRC connection with the BS after the UE establishes the first RRC connection with the BS.

When GNSS positioning information expires, the UE may need to update its own GNSS positioning information. It may take some time, e.g., a couple of seconds, for the UE to update the GNSS positioning information. As such, the UE may be disconnected from the satellite (or UAS platform) first by releasing the RRC connection with the BS. After the new GNSS positioning information is obtained, the UE may be reconnected to the BS with the satellite. After the connection is established, the BS may need to obtain the cause why the UE released the previous RRC connection with the BS, such that the BS can perform some adjustments to configure future operations. For example, the BS may adjust the first time period's time slot and/or time length. Thus, the UE may send the message indicating a cause of the UE releasing an RRC connection and/or reestablishing an RRC connection with the BS after the UE reestablishes the RRC connection with the BS.

The cause may include at least one of an expiration of the GNSS positioning information, a timer associated with the GNSS positioning information reaching a threshold, or an update of the GNSS positioning information. Further, the second message may be transmitted as at least one of an RRC reestablishment request message, an RRC resume request message, an RRC connection request message, an RRC early data request message, a UE information response message, a UE assistance information message.

In one implementation, the UE may receive an RRC release message from the BS. The RRC release message may include the cause of releasing/reestablishment. In this case, an AS layer of the UE may provide the cause to an NAS layer of the UE.

Correspondingly referring to Fig. 7 again, a wireless communication method performed by a base station is provided. The method may include establishing, a first RRC connection between a base station (BS) and a user equipment (UE); and receiving a message indicating a cause of the UE releasing a second RRC connection or establishing the first RRC connection with the BS after the UE establishes the first RRC connection with the BS. As explained above, the BS may adjust, according to the message, a time period used by the UE to update Global Navigation Satellite System (GNSS) positioning information of the UE or system information of the UE.

According to another embodiment, another wireless communication method is provided. The method may include providing information about a cause of a user equipment (UE) releasing a first RRC connection and/or reestablishing a second RRC connection with a base station (BS) from an access stratum (AS) layer to a non-access stratum (NAS) layer of the UE. The cause may include at least one of an expiration of GNSS positioning information, a timer associated with the GNSS positioning information reaching a threshold, or an update of the GNSS positioning information. Additionally, the UE may receive an RRC release message from the BS, wherein the RRC release message includes the cause and the AS layer provides the cause to a NAS layer. In this case, the AS layer and/or the NAS layer may trigger an RRC releasing process.

The methods/steps disclosed above can be performed by the UE, the BS, and the wireless communication as disclosed in Fig. 1. Additionally, the hardware of the UE, the BS, and the wireless communication system may include non-transitory computer readable storage medium, storing one or more instructions. When the one or more instructions are executed by a processor, a wireless communication device is caused to perform the methods/steps as disclosed above.

Various exemplary embodiments of the present disclosure are described below with reference to the accompanying figures to enable a person of ordinary skill in the art to make and use the present disclosure. The present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art would understand that the methods and techniques disclosed herein present various steps or acts in exemplary order(s), and the present disclosure is not limited to the specific order or hierarchy presented unless expressly stated otherwise.

Table 1 below list the acronyms used in this disclosure.

| Acronym | Full Name |
|---|---|
| NTN | Non-terrestrial network |
| TA | Timing advance |
| BS | Base station |
| GW | Gateway |
| UE | User equipment |
| GNSS | Global navigation satellite system |
| DL | Downlink |
| UL | Uplink |
| SIB | System information block |
| PUSCH | Physical uplink shared channel |
| PDCCH | Physical downlink control channel |
| RACH | Random access channel |
| UAS | Unmanned aerial systems |
| AS | Access stratum |
| NAS | Non-access stratum |
| PUCCH | Physical Uplink Control Channel |
| RRC | Radio Resource Control |
| MAC CE | MAC Control Element |
| MME | Mobility Management Entity |

This disclosure is intended to cover any conceivable variations, uses, combination, or adaptive changes of this disclosure following the general principles of this disclosure, and includes well-known knowledge and conventional technical means in the art and undisclosed in this application.

It is to be understood that this disclosure is not limited to the precise structures or operation described above and shown in the accompanying drawings, and various modifications and changes may be made without departing from the scope of this application. The scope of this application is subject only to the appended claims.

## Claims

1. A wireless communication method, performed by a user equipment, UE, (104), comprising:
receiving a Radio Resource Control, RRC, message from a base station, BS, (102);
in response to receiving the RRC message, activating a transmission of a first message to the BS, the first message comprising at least one of:
timing information associated with Global Navigation Satellite System, GNSS, positioning information of the UE or system information, the system information including at least one of timing advance, TA, information or satellite positioning information, the timing information comprising a time when the UE obtains the GNSS positioning information for indicating a time period for the UE to update the GNSS positioning information or retrieve the system information, or
an instruction, to the BS, associated with the time period when the UE updates the GNSS positioning information or retrieves the system information; and
updating at least one of the GNSS positioning information or the system information during the time period.

2. The method of claim 1, wherein the timing information associated with the GNSS positioning information or the system information further comprises at least one of:
a time when the UE receives the system information,
an index indicating a transmission time of the system information,
a starting time of a timer associated with the GNSS positioning information or a timer associated with the system information,
a value of one or more of the timers,
a remaining time before the system information expires,
a time difference between the UE receiving the system information and applying the system information, or
a time difference between the BS transmitting the system information and the UE receiving the system information.

3. The method of claim 1, wherein the timing information is indicative of a valid time duration of the GNSS positioning information or the system information and the method further comprises starting a timer associated with the valid time duration after the UE receives one or more of the GNSS positioning information or the system information.

4. The method of claim 1, wherein the instruction is transmitted when at least one of the following conditions is met:
the UE is determined to be out-of-synchronization with the BS within a first time duration;
the system information will expire within a second time duration;
a timer associated with the system information will reach a first threshold value within a third time duration;
the UE retrieves the system information or will retrieve the system information within a fourth time duration;
the GNSS positioning information will expire within a fifth time duration;
a timer associated with the GNSS positioning information will reach a second threshold value within a sixth time duration; or
the UE initiates to obtain an updated GNSS positioning information or will obtain the updated GNSS positioning information within a seventh time duration.

5. The method of claim 4, wherein transmitting the first message comprises:
transmitting the first message as a MAC Control Element, MAC CE, wherein the MAC CE comprises one or more first bits indicating the condition being met and one or more second bits indicating at least one of a time duration or a period length of the time period; or
transmitting the first message in a preamble sequence for random access or via a Physical Uplink Control Channel, PUCCH, wherein the method further comprises receiving an RRC message to configure frequency and/or time domain resources for transmitting the first message, wherein the frequency and/or time domain resource indicates the condition being met.

6. The method of claim 1, further comprising:
starting updating the GNSS positioning information or retrieving the system information at a predetermined time duration after transmitting the first message comprising the instruction to the BS; or
receiving an acknowledgement message from the BS in response to the BS receiving the first message, and updating the GNSS positioning information or retrieving the system information after the acknowledgement message is received and a timer associated with at least one of the system information or the GNSS positioning information reaches a threshold.

7. The method of claim 1, further comprising sending another timing information associated with the GNSS positioning information to a core network connected to the BS, wherein the another timing information associated with the GNSS positioning information is derived from the timing information and comprises at least one of
a valid time length of the GNSS positioning information;
a remaining time before the GNSS positioning information expires; or
a starting time of the GNSS positioning information.

8. The method of claim 1, further comprising sending a second message indicating a cause of the UE releasing an RRC connection or reestablishing an RRC connection with the BS after the UE reestablishes the RRC connection with the BS after the GNSS positioning information is updated; wherein:
the cause comprises at least one of an expiration of the GNSS positioning information, a timer associated with the GNSS positioning information reaching a threshold, or an update of the GNSS positioning information; and
the second message is transmitted as at least one of an RRC reestablishment request message, an RRC resume request message, an RRC connection request message, an RRC early data request message, a UE information response message, or a UE assistance information message.

9. The method of claim 1, further comprising providing:
information about a cause of the UE releasing a first RRC connection or reestablishing a second RRC connection with the BS from an access stratum, AS, layer to a non-access stratum, NAS, layer of the UE; or
UE positioning information to a core network via a NAS data packet in an RRC message transmitted by the UE, wherein the RRC message comprises at least one of a UE context release message, a PDU session resource setup response message, a downlink NAS transport message, an initial context setup request message, a UE information transfer message, and wherein the UE positioning information comprises at least one of physical position information of the UE or an identification of a recommended core network.

10. A wireless communication method, comprising:
transmitting a Radio Resource Control, RRC, message , by a first base station, BS, (102) to a user equipment, UE, (104) to activate a transmission of a first message by the UE to the BS, the first message comprising at least one of:
timing information associated with Global Navigation Satellite System, GNSS, positioning information of the UE or system information, the system information including at least one of timing advance, TA, information or satellite positioning information, the timing information comprising a time when the UE obtains the GNSS positioning information for indicating a time period for the UE to update the GNSS positioning information or retrieve the system information, or
an instruction to the BS associated with the time period when the UE updates the GNSS positioning information or the system information;
transmitting the system information to the UE to update its system information; and
configuring the UE after the time period.

11. The method of claim 10, further comprising transmitting a second message to a second BS, to which the UE will establish connection, the second message comprising the timing information, optionally wherein the second message comprises:
at least one of:
a remaining time before the system information expires;
a value of a timer associated with the system information;
a starting time of the timer;
a threshold value of the timer;
a remaining time before the timer reaches the threshold value;
a valid time length of the system information; or
a starting time of the system information; or
at least one of:
a valid time length of the GNSS positioning information;
a remaining time before the GNSS positioning information expires; or
a starting time of the GNSS positioning information.

12. The method of claim 10, further comprising determining:
the time period and configuring the time period for the UE to update the GNSS positioning information or the system information; or
an expiration time of at least one of the GNSS positioning information or the system information based on the timing information associated with the GNSS positioning information or the system information.

13. The method of claim 10, wherein the timing information associated with the GNSS positioning information or the system information is indicative of a valid time duration of the GNSS positioning information and further comprises at least one of:
a time when the UE receives the system information,
an index indicating a transmission time of the system information,
a starting time of a timer associated with the GNSS positioning information or a timer associated with the system information,
a value of one or more of the timers,
a remaining time before the system information expires,
a time difference between the UE receiving the system information and applying the system information, or
a time difference between the BS transmitting the system information and the UE receiving the system information.

14. The method of claim 10, wherein the instruction is transmitted when at least one of the following conditions is met:
the UE is determined to be out-of-synchronization with the BS within a first time duration;
the system information will expire within a second time duration;
a timer associated with the system information will reach a first threshold value within a third time duration;
the UE retrieves the system information or will retrieve the system information within a fourth time duration;
the GNSS positioning information will expire within a fifth time duration;
a timer associated with the GNSS positioning information will reach a second threshold value within a sixth time duration; or
the UE initiates obtaining an updated GNSS positioning information or will obtain the updated GNSS positioning information within a seventh time duration.

15. The method of claim 14, wherein:
the first message is received as a MAC Control Element, MAC CE, wherein the MAC CE comprises one or more first bits indicating the condition being met and one or more second bits indicating at least one of a time duration or a period length of the time period; or
the first message is received in a preamble sequence for random access or via a Physical Uplink Control Channel, PUCCH, wherein the method further comprises receiving an RRC message to configure frequency and/or time domain resources for transmitting the first message, wherein the frequency and/or time domain resource configuration indicates the condition being met.

## Patentansprüche

1. Drahtloses Kommunikationsverfahren, das durch eine Benutzereinrichtung, UE, (104) ausgeführt wird, aufweisend:
Empfangen einer Funkressourcensteuerungsnachricht, RRC-Nachricht, von einer Basisstation, BS, (102);
als Reaktion auf das Empfangen der RRC-Nachricht, Aktivieren einer Übertragung einer ersten Nachricht an die BS, die erste Nachricht aufweisend mindestens eines von:
Zeitinformationen, die mit Positionsbestimmungsinformationen eines globalen Navigationssatellitensystems, GNSS, der UE oder Systeminformationen verknüpft sind, wobei die Systeminformationen mindestens eines von Zeitvorlaufinformationen, TA-Informationen, oder
Satellitenpositionsbestimmungsinformationen einschließen, die Zeitinformationen aufweisend einen Zeitpunkt, zu dem die UE die GNSS-Positionsbestimmungsinformationen erhält, zum Angeben einer Zeitspanne für die UE, um die GNSS-Positionsbestimmungsinformationen zu aktualisieren oder die Systeminformationen abzurufen, oder
einer Anweisung an die BS, die mit der Zeitspanne verknüpft ist, in der die UE die GNSS-Positionsbestimmungsinformationen aktualisiert oder die Systeminformationen abruft; und
Aktualisieren mindestens einer der GNSS-Positionsinformationen oder der Systeminformationen während der Zeitspanne.

2. Verfahren nach Anspruch 1, wobei die Zeitinformationen, die mit den GNSS-Positionsbestimmungsinformationen oder den Systeminformationen verknüpft sind, ferner mindestens eines aufweisen von:
einem Zeitpunkt, zu dem die UE die Systeminformationen empfängt,
einem Index, der eine Übertragungszeit der Systeminformationen angibt,
einer Startzeit eines Zeitgebers, der mit den GNSS-Positionsbestimmungsinformationen verknüpft ist, oder eines Zeitgebers, der mit den Systeminformationen verknüpft ist,
einem Wert eines oder mehrerer der Zeitgeber,
einer verbleibenden Zeit, bevor die Systeminformationen ablaufen,
einer Zeitdifferenz zwischen dem Empfangen der Systeminformationen durch die UE und dem Anwenden der Systeminformationen, oder
einer Zeitdifferenz zwischen dem Übertragen der Systeminformationen durch die BS und dem Empfangen der Systeminformationen durch die UE.

3. Verfahren nach Anspruch 1, wobei die Zeitinformationen eine gültige Zeitdauer der GNSS-Positionsbestimmungsinformationen oder der Systeminformationen angeben und das Verfahren ferner ein Starten eines Zeitgebers aufweist, der mit der gültigen Zeitdauer verknüpft ist, nachdem die UE eine oder mehrere der GNSS-Positionsbestimmungsinformationen oder der Systeminformationen empfängt.

4. Verfahren nach Anspruch 1, wobei die Anweisung übertragen wird, wenn mindestens eine der folgenden Bedingungen erfüllt ist:
es wird bestimmt, dass die UE innerhalb einer ersten Zeitdauer nicht mit der BS synchronisiert ist;
die Systeminformationen werden innerhalb einer zweiten Zeitdauer ablaufen;
ein Zeitgeber, der mit den Systeminformationen verknüpft ist, wird innerhalb einer dritten Zeitdauer einen ersten Grenzwert erreichen;
die UE ruft die Systeminformationen ab oder wird die Systeminformationen innerhalb einer vierten Zeitdauer abrufen;
die GNSS-Positionsinformationen werden innerhalb einer fünften Zeitdauer ablaufen;
ein Zeitgeber, der mit den GNSS-Positionsinformationen verknüpft ist, wird einen zweiten Grenzwert innerhalb einer sechsten Zeitdauer erreichen; oder
die UE initiiert das Erhalten von aktualisierten GNSS-Positionsbestimmungsinformationen oder wird die aktualisierten GNSS-Positionsbestimmungsinformationen innerhalb einer siebten Zeitdauer erhalten.

5. Verfahren nach Anspruch 4, wobei das Übertragen der ersten Nachricht aufweist:
Übertragen der ersten Nachricht als ein MAC-Steuerelement, MAC-CE, wobei das MAC-CE ein oder mehrere erste Bits, die angeben, dass die Bedingung erfüllt ist, und ein oder mehrere zweite Bits, die mindestens eines von einer Zeitdauer oder einer Spannenlänge der Zeitspanne angeben, aufweist; oder
Übertragen der ersten Nachricht in einer Oberbegriffssequenz für einen Direktzugriff oder über einen physischen Uplink-Steuerkanal, PUCCH, wobei das Verfahren ferner das Empfangen einer RRC-Nachricht aufweist, um Frequenz- und/oder Zeitbereichsressourcen zum Übertragen der ersten Nachricht zu konfigurieren, wobei die Frequenz- und/oder Zeitbereichsressource indiziert, dass die Bedingung erfüllt ist.

6. Verfahren nach Anspruch 1, ferner aufweisend:
Starten des Aktualisierens der GNSS-Positionsbestimmungsinformationen oder des Abrufens der Systeminformationen eine vorbestimmte Zeitdauer nach dem Übertragen der ersten Nachricht, aufweisend die Anweisung, an die BS; oder
Empfangen einer Bestätigungsnachricht von der BS als Reaktion auf das Empfangen der ersten Nachricht durch die BS, und Aktualisieren der GNSS-Positionsbestimmungsinformationen oder Abrufen der Systeminformationen, nachdem die Bestätigungsnachricht empfangen wurde und ein Zeitgeber, der mit mindestens einem von den Systeminformationen oder den GNSS-Positionsbestimmungsinformationen verknüpft ist, einen Grenzwert erreicht.

7. Verfahren nach Anspruch 1, ferner aufweisend das Senden von weiteren Zeitinformationen, die mit den GNSS-Positionsbestimmungsinformationen verknüpft sind, an ein Kernnetzwerk, das mit der BS verbunden ist, wobei die weiteren Zeitinformationen, die mit den GNSS-Positionsbestimmungsinformationen verknüpft sind, aus den Zeitinformationen abgeleitet sind und mindestens eines aufweisen von
einer gültigen Zeitdauer der GNSS-Positionierungsinformationen;
einer verbleibenden Zeit, bevor die GNSS-Positionsinformationen ablaufen; oder einer Startzeit der GNSS-Positionsinformationen.

8. Verfahren nach Anspruch 1, ferner aufweisend das Senden einer zweiten Nachricht, die eine Ursache für ein Freigeben einer RRC-Verbindung oder ein Wiederherstellen einer RRC-Verbindung mit der BS durch die UE angibt, nachdem die UE die RRC-Verbindung mit der BS wiederherstellt, nachdem die GNSS-Positionierungsinformationen aktualisiert wurden; wobei:
die Ursache mindestens eines von einem Ablaufen der GNSS-Positionsbestimmungsinformationen, einem Erreichen eines Grenzwerts durch einen Zeitgeber, der mit den GNSS-Positionsbestimmungsinformationen verknüpft ist, oder einer Aktualisierung der GNSS-Positionsbestimmungsinformationen aufweist; und
die zweite Nachricht als mindestens eine von einer RRC-Wiederherstellungsanforderungsnachricht, einer RRC-Wiederaufnahmeanforderungsnachricht, einer RRC-Verbindungsanforderungsnachricht, einer RRC-Frühdatenanforderungsnachricht, einer UE-Informationsantwortnachricht oder einer UE-Assistenzinformationsnachricht übertragen wird.

9. Verfahren nach Anspruch 1, ferner aufweisend das Bereitstellen von:
Informationen über eine Ursache für das Freigeben einer ersten RRC-Verbindung oder das Wiederherstellen einer zweiten RRC-Verbindung mit der BS durch die UE von einer Access-Stratum-Schicht, AS-Schicht, an eine Non-Access-Stratum-Schicht, NAS-Schicht, der UE; oder
UE-Positionierungsinformationen an ein Kernnetzwerk über ein NAS-Datenpaket in einer RRC-Nachricht, die durch die UE übertragen wird, wobei die RRC-Nachricht mindestens eines von einer UE-Kontextfreigabenachricht, einer PDU-Sitzungsressourceneinrichtungsantwortnachricht, einer Downlink-NAS-Transportnachricht, einer anfänglichen Kontexteinrichtungsanforderungsnachricht, einer UE-Informationsübertragungsnachricht aufweist, und wobei die UE-Positionierungsinformationen mindestens eines von physischen Positionsinformationen der UE oder einer Identifikation eines empfohlenen Kernnetzwerkes aufweisen.

10. Drahtloses Kommunikationsverfahren, aufweisend: Übertragen einer Funkressourcensteuerungsnachricht, RRC-Nachricht, durch eine erste Basisstation, BS, (102) an eine Benutzereinrichtung, UE, (104), um eine Übertragung einer ersten Nachricht durch die UE an die BS zu aktivieren, die erste Nachricht aufweisend mindestens eines von:
Zeitinformationen, die mit Positionsbestimmungsinformationen eines globalen Navigationssatellitensystems, GNSS, der UE oder Systeminformationen verknüpft sind, wobei die Systeminformationen mindestens eines von Zeitvorlaufinformationen, TA-Informationen, oder
Satellitenpositionsbestimmungsinformationen einschließen, die Zeitinformationen aufweisend einen Zeitpunkt, zu dem die UE die GNSS-Positionsbestimmungsinformationen erhält, zum Angeben einer Zeitspanne für die UE, um die GNSS-Positionsbestimmungsinformationen zu aktualisieren oder die Systeminformationen abzurufen, oder
einer Anweisung an die BS, die mit der Zeitspanne verknüpft ist, in der die UE die GNSS-Positionsbestimmungsinformationen oder die Systeminformationen aktualisiert;
Übertragen der Systeminformationen an die UE, um deren Systeminformationen zu aktualisieren; und Konfigurieren der UE nach der Zeitspanne.

11. Verfahren nach Anspruch 10, ferner aufweisend das Übertragen einer zweiten Nachricht an eine zweite BS, zu der die UE eine Verbindung herstellen wird, die zweite Nachricht aufweisend die Zeitinformationen, optional wobei die zweite Nachricht aufweist:
mindestens eines von:
einer verbleibenden Zeit, bevor die Systeminformationen ablaufen;
einem Wert eines Zeitgebers, der mit den Systeminformationen verknüpft ist;
einer Startzeit des Zeitgebers;
einem Grenzwert des Zeitgebers;
einer verbleibenden Zeit, bevor der Zeitgeber den Grenzwert erreicht;
einer Gültigkeitsdauer der Systeminformationen; oder
einer Startzeit der Systeminformationen; oder
mindestens eines von:
einer gültigen Zeitdauer der GNSS-Positionierungsinformationen;
einer verbleibenden Zeit, bevor die GNSS-Positionsinformationen ablaufen; oder
einer Startzeit der GNSS-Positionsinformationen.

12. Verfahren nach Anspruch 10, ferner aufweisend das Bestimmen von:
der Zeitspanne und Konfigurieren der Zeitspanne für die UE, um die GNSS-Positionsbestimmungsinformationen oder der Systeminformationen zu aktualisieren; oder
einer Ablaufzeit von mindestens einer von den GNSS-Positionsbestimmungsinformationen oder den Systeminformationen basierend auf den Zeitinformationen, die mit den GNSS-Positionsbestimmungsinformationen oder den Systeminformationen verknüpft sind.

13. Verfahren nach Anspruch 10, wobei die Zeitinformationen, die mit den GNSS-Positionsbestimmungsinformationen oder den Systeminformationen verknüpft sind, eine gültige Zeitdauer der GNSS-Positionsbestimmungsinformationen angeben und ferner mindestens eines aufweisen von:
einem Zeitpunkt, zu dem die UE die Systeminformationen empfängt,
einem Index, der eine Übertragungszeit der Systeminformationen angibt,
einer Startzeit eines Zeitgebers, der mit den GNSS-Positionsbestimmungsinformationen verknüpft ist, oder eines Zeitgebers, der mit den Systeminformationen verknüpft ist,
einem Wert eines oder mehrerer der Zeitgeber,
einer verbleibenden Zeit, bevor die Systeminformationen ablaufen,
einer Zeitdifferenz zwischen dem Empfangen der Systeminformationen durch die UE und dem Anwenden der Systeminformationen, oder
einer Zeitdifferenz zwischen dem Übertragen der Systeminformationen durch die BS und dem Empfangen der Systeminformationen durch die UE.

14. Verfahren nach Anspruch 10, wobei die Anweisung übertragen wird, wenn mindestens eine der folgenden Bedingungen erfüllt ist:
es wird bestimmt, dass die UE innerhalb einer ersten Zeitdauer nicht mit der BS synchronisiert ist;
die Systeminformationen werden innerhalb einer zweiten Zeitdauer ablaufen;
ein Zeitgeber, der mit den Systeminformationen verknüpft ist, wird innerhalb einer dritten Zeitdauer einen ersten Grenzwert erreichen;
die UE ruft die Systeminformationen ab oder wird die Systeminformationen innerhalb einer vierten Zeitdauer abrufen;
die GNSS-Positionsinformationen werden innerhalb einer fünften Zeitdauer ablaufen;
ein Zeitgeber, der mit den GNSS-Positionsinformationen verknüpft ist, wird einen zweiten Grenzwert innerhalb einer sechsten Zeitdauer erreichen; oder
die UE initiiert das Erhalten von aktualisierten GNSS-Positionsbestimmungsinformationen oder wird die aktualisierten GNSS-Positionsbestimmungsinformationen innerhalb einer siebten Zeitdauer erhalten.

15. Verfahren nach Anspruch 14, wobei:
die erste Nachricht als ein MAC-Steuerelement, MAC-CE, empfangen wird, wobei das MAC-CE ein oder mehrere erste Bits, die angeben, dass die Bedingung erfüllt ist, und ein oder mehrere zweite Bits, die mindestens eines von einer Zeitdauer oder einer Spannenlänge der Zeitspanne angeben, aufweist; oder
die erste Nachricht in einer Oberbegriffssequenz für den Direktzugriff oder über einen physischen Uplink-Steuerkanal, PUCCH, empfangen wird, wobei das Verfahren ferner das Empfangen einer RRC-Nachricht aufweist, um Frequenz- und/oder Zeitbereichsressourcen zum Übertragen der ersten Nachricht zu konfigurieren, wobei die Frequenz- und/oder Zeitbereichsressourcenkonfiguration indiziert, dass die Bedingung erfüllt ist.

## Revendications

1. Procédé de communication sans fil, réalisé par un équipement utilisateur, UE, (104), comprenant :
la réception d'un message de commande de ressource radio, RRC, en provenance d'une station de base, BS, (102) ;
en réponse à la réception du message RRC, l'activation d'une transmission d'un premier message à la BS, le premier message comprenant au moins l'une parmi :
des informations de temporisation associées au système mondial de navigation par satellite, GNSS, des informations de positionnement de l'UE ou des informations système, les informations système comportant au moins l'une parmi des informations d'avance de temporisation, TA, ou des informations de positionnement satellite, les informations de temporisation comprenant un moment où l'UE obtient les informations de positionnement GNSS pour indiquer une période au cours de laquelle l'UE doit mettre à jour les informations de positionnement GNSS ou récupérer les informations système, ou
une instruction, à la BS, associée à la période au cours de laquelle l'UE met à jour les informations de positionnement GNSS ou récupère les informations système ; et
la mise à jour d'au moins l'une parmi les informations de positionnement GNSS ou les informations système au cours de la période.

2. Procédé selon la revendication 1, dans lequel les informations de temporisation associées aux informations de positionnement GNSS ou aux informations système comprennent en outre au moins l'un parmi :
un moment où l'UE reçoit les informations système,
un index indiquant un moment de transmission des informations système,
un moment de démarrage d'un temporisateur associé aux informations de positionnement GNSS ou d'un temporisateur associé aux informations système,
une valeur d'un ou plusieurs parmi les temporisateurs,
un temps restant avant que les informations système n'expirent,
une différence temporelle entre l'UE recevant les informations système et appliquant les informations système, ou
une différence temporelle entre la BS transmettant les informations système et l'UE recevant les informations système.

3. Procédé selon la revendication 1, dans lequel les informations de temporisation indiquent une durée valide des informations de positionnement GNSS ou des informations système et le procédé comprend en outre le démarrage d'un temporisateur associé à la durée valide après que l'UE a reçu une ou plusieurs parmi les informations de positionnement GNSS ou les informations système.

4. Procédé selon la revendication 1, dans lequel l'instruction est transmise lorsqu'au moins l'une parmi les conditions suivantes est satisfaite :
l'UE est déterminé comme étant hors synchronisation avec la BS au cours d'une première durée ;
les informations système expireront au cours d'une deuxième durée ;
un temporisateur associé aux informations système atteindra une première valeur seuil au cours d'une troisième durée ;
l'UE récupère les informations système ou récupérera les informations système au cours d'une quatrième durée ;
les informations de positionnement GNSS expireront au cours d'une cinquième durée ;
un temporisateur associé aux informations de positionnement GNSS atteindra une seconde valeur seuil au cours d'une sixième durée ; ou
l'UE initie l'obtention d'informations de positionnement GNSS mises à jour ou obtiendra les informations de positionnement GNSS mises à jour au cours d'une septième durée.

5. Procédé selon la revendication 4, dans lequel la transmission du premier message comprend :
la transmission du premier message en tant qu'élément de commande MAC, CE MAC, dans lequel le CE MAC comprend un ou plusieurs premiers bits indiquant la condition étant satisfaite et un ou plusieurs seconds bits indiquant au moins l'une parmi une durée ou une longueur de période de la période ; ou
la transmission du premier message dans une séquence de préambules pour un accès aléatoire ou par l'intermédiaire d'un canal de commande de liaison montante physique, PUCCH, dans lequel le procédé comprend en outre la réception d'un message RRC pour configurer des ressources dans le domaine fréquentiel et/ou temporel afin de transmettre le premier message, dans lequel la ressource dans le domaine fréquentiel et/ou temporel indique que la condition est satisfaite.

6. Procédé selon la revendication 1, comprenant en outre :
le démarrage d'une mise à jour des informations de positionnement GNSS ou la récupération des informations système à une durée prédéterminée après une transmission du premier message comprenant l'instruction à la BS ; ou
la réception d'un message d'accusé de réception en provenance de la BS en réponse à la BS recevant le premier message, et la mise à jour des informations de positionnement GNSS ou la récupération des informations système après que le message d'accusé de réception est reçu et un temporisateur, associé à au moins l'une parmi les informations système ou les informations de positionnement GNSS, atteint un seuil.

7. Procédé selon la revendication 1, comprenant en outre l'envoi d'autres informations de temporisation associées aux informations de positionnement GNSS à un réseau central connecté à la BS, dans lequel les autres informations de temporisation associées aux informations de positionnement GNSS sont dérivées des informations de temporisation et comprennent au moins l'un parmi
une durée valide des informations de positionnement GNSS ;
un temps restant avant que les informations de positionnement GNSS n'expirent ; ou
un moment de démarrage des informations de positionnement GNSS.

8. Procédé selon la revendication 1, comprenant en outre l'envoi d'un second message indiquant une cause pour laquelle l'UE libérant une connexion RRC ou rétablissant une connexion RRC avec la BS, après que l'UE rétablit la connexion RRC avec la BS après que les informations de positionnement GNSS sont mises à jour ; dans lequel :
la cause comprend au moins l'un parmi une expiration des informations de positionnement GNSS, un temporisateur associé aux informations de positionnement GNSS atteignant un seuil, ou une mise à jour des informations de positionnement GNSS ; et
le second message est transmis en tant qu'au moins l'un parmi un message de demande de rétablissement RRC, un message de demande de reprise RRC, un message de demande de connexion RRC, un message de demande anticipée de données RRC, un message de réponse d'informations d'UE ou un message d'informations d'assistance d'UE.

9. Procédé selon la revendication 1, comprenant en outre la fourniture :
d'informations concernant une cause de l'UE libérant une première connexion RRC ou rétablissant une seconde connexion RRC avec la BS d'une couche de strate d'accès, AS, à une couche de strate de non-accès, NAS, de l'UE ; ou
d'informations de positionnement d'UE vers un réseau central par l'intermédiaire d'un paquet de données NAS dans un message RRC transmis par l'UE, dans lequel le message RRC comprend au moins l'un parmi un message de libération de contexte d'UE, un message de réponse de configuration de ressource de session PDU, un message de transport NAS de liaison descendante, un message de demande de configuration de contexte initial, un message de transfert d'informations d'UE, et dans lequel les informations de positionnement d'UE comprennent au moins l'une parmi des informations de position physique de l'UE ou une identification d'un réseau central recommandé.

10. Procédé de communication sans fil, comprenant :
la transmission d'un message de commande de ressource radio, RRC, par une première station de base, BS, (102) à un équipement utilisateur, UE, (104) pour activer une transmission d'un premier message par l'UE à la BS, le premier message comprenant au moins l'une parmi :
des informations de temporisation associées au système mondial de navigation par satellite, GNSS, des informations de positionnement de l'UE ou des informations système, les informations système comportant au moins l'une parmi des informations d'avance de temporisation, TA, ou des informations de positionnement satellite, les informations de temporisation comprenant un moment où l'UE obtient les informations de positionnement GNSS pour indiquer une période au cours de laquelle l'UE doit mettre à jour les informations de positionnement GNSS ou récupérer les informations système, ou
une instruction à la BS associée à la période au cours de laquelle l'UE met à jour les informations de positionnement GNSS ou les informations système ;
la transmission des informations système à l'UE pour mettre à jour ses informations système ; et la configuration de l'UE après la période.

11. Procédé selon la revendication 10, comprenant en outre la transmission d'un second message à une seconde BS, à laquelle l'UE établira une connexion, le second message comprenant les informations de temporisation, éventuellement dans lequel le second message comprend :
au moins l'un parmi :
un temps restant avant que les informations système n'expirent ;
une valeur d'un temporisateur associé aux informations système ;
un moment de démarrage du temporisateur ;
une valeur seuil du temporisateur ;
un temps restant avant que le temporisateur n'atteigne la valeur seuil ;
une durée valide des informations système ; ou
un moment de démarrage des informations système ; ou
au moins l'un parmi :
une durée valide des informations de positionnement GNSS ;
un temps restant avant que les informations de positionnement GNSS n'expirent ; ou
un moment de démarrage des informations de positionnement GNSS.

12. Procédé selon la revendication 10, comprenant en outre la détermination :
de la période et de la configuration de la période au cours de laquelle l'UE doit mettre à jour les informations de positionnement GNSS ou les informations système ; ou
d'un moment d'expiration d'au moins l'une parmi les informations de positionnement GNSS ou les informations système sur la base des informations de temporisation associées aux informations de positionnement GNSS ou aux informations système.

13. Procédé selon la revendication 10, dans lequel les informations de temporisation associées aux informations de positionnement GNSS ou aux informations système indiquent une durée valide des informations de positionnement GNSS et comprennent en outre au moins l'un parmi :
un moment où l'UE reçoit les informations système,
un index indiquant un moment de transmission des informations système,
un moment de démarrage d'un temporisateur associé aux informations de positionnement GNSS ou d'un temporisateur associé aux informations système,
une valeur d'un ou plusieurs parmi les temporisateurs,
un temps restant avant que les informations système n'expirent,
une différence temporelle entre l'UE recevant les informations système et appliquant les informations système, ou
une différence temporelle entre la BS transmettant les informations système et l'UE recevant les informations système.

14. Procédé selon la revendication 10, dans lequel l'instruction est transmise lorsqu'au moins l'une parmi les conditions suivantes est satisfaite :
l'UE est déterminé comme étant hors synchronisation avec la BS au cours d'une première durée ;
les informations système expireront au cours d'une deuxième durée ;
un temporisateur associé aux informations système atteindra une première valeur seuil au cours d'une troisième durée ;
l'UE récupère les informations système ou récupérera les informations système au cours d'une quatrième durée ;
les informations de positionnement GNSS expireront au cours d'une cinquième durée ;
un temporisateur associé aux informations de positionnement GNSS atteindra une seconde valeur seuil au cours d'une sixième durée ; ou
l'UE initie l'obtention d'informations de positionnement GNSS mises à jour ou obtiendra les informations de positionnement GNSS mises à jour au cours d'une septième durée.

15. Procédé selon la revendication 14, dans lequel :
le premier message est reçu en tant qu'élément de commande MAC, CE MAC, dans lequel le CE MAC comprend un ou plusieurs premiers bits indiquant la condition étant satisfaite et un ou plusieurs seconds bits indiquant au moins l'une parmi une durée ou une longueur de période de la période ; ou
le premier message est reçu dans une séquence de préambules pour un accès aléatoire ou par l'intermédiaire d'un canal de commande de liaison montante physique, PUCCH, dans lequel le procédé comprend en outre la réception d'un message RRC pour configurer des ressources dans le domaine fréquentiel et/ou temporel afin de transmettre le premier message, dans lequel la configuration de ressources dans le domaine fréquentiel et/ou temporel indique que la condition est satisfaite.
